Europäisches Patentamt

European Patent Office

Office européen des brevets

(19)

(11) Numéro de publication: **0 382 626**

**A1**

## (12) DEMANDE DE BREVET EUROPEEN

(21) Numéro de dépôt: **90400321.7**

(22) Date de dépôt: **06.02.90**

(51) Int. Cl.5: **G02F 1/37, G02F 1/035**

(30) Priorité: **09.02.89 FR 8901680**

(43) Date de publication de la demande:
**16.08.90 Bulletin 90/33**

(84) Etats contractants désignés:
**DE GB NL**

(71) Demandeur: **THOMSON-CSF**
**51, Esplanade du Général de Gaulle**
**F-92800 Puteaux(FR)**

(72) Inventeur: **Papuchon, Michel**
**Thomson-CSF, SCPI-Cédex 67**
**F-92045 Paris La Défense(FR)**

(74) Mandataire: **Grynwald, Albert et al**
**THOMSON-CSF SCPI**
**F-92045 PARIS LA DEFENSE CEDEX 67(FR)**

(54) **Dispositif optique de traitement d'une onde optique, son procédé de réalisation et un doubleur de fréquence.**

(57) Dispositif optique de traitement par effets non linéaires d'une onde optique comportant la surface (10) un substrat ferroélectrique (1) un guide G1 et des zones de dopages (ZD1 à ZDn) disposées transversalement à la direction du guide.

Le pas de répartition de ces zones est égal à un multiple pair de la longueur de cohérence pour l'intéraction envisagée. La longueur de chaque zone selon la direction du guide égale à un multiple impair de la longueur de cohérence.

**APPLICATIONS: Doubleur de fréquence**
**Emission lumineuse dans le bleu**

FIG_1

EP 0 382 626 A1

## DISPOSITIF OPTIQUE DE TRAITEMENT D'UNE ONDE OPTIQUE, SON PROCEDE DE REALISATION ET UN DOUBLEUR DE FREQUENCE

L'invention concerne un dispositif optique de traitement d'une onde optique, son procédé de réalisation et un doubleur de fréquence.

Plus particulièrement, elle concerne un dispositif et un procédé qui permettent d'obtenir des effets non linéaires optiques importants dans des guides d'ondes réalisés dans des matériaux ferroélectriques.

Il est bien connu que la polarisation électrique induite dans un milieu par une onde électromagnétique peut s'écrire sous la forme :

$$P = d^{(1)} E + d^{2}) EE + ....$$

où E est le champ magnétique électrique associé a l'onde électromagnétique.

Dans cette expression, le premier terme est responsable des propriétés linéaires du matériau et les suivants des propriétés non linéaires qui peuvent donner lieu aux phénomènes de doublage, triplage, addition ... de fréquence.

Les termes d'ordre pair n'existent que dans les milieux ne présentant pas de centre de symétrie.

Pour que de telles interactions non linéaires soient efficaces, il est en général nécessaire qu'une condition dite d'accord de phase soit vérifiée. En effet, la polarisation non linéaire va rayonner en tout point un champ électromagnétique de même fréquence mais dont la phase sera déterminée par les sommes des phases des champs générateurs en ce point. Par contre, la phase du champ rayonné va naturellement se comporter différemment et en particulier dépendra de l'indice de réfraction du milieu a la fréquence harmonique.

En fait, une autre façon de formuler cette condition est de considérer que, pour que de telles interactions non linéaires soient efficaces, deux conditions doivent être considérées.

1) Conservation de l'énergie ;
2) Conservation des moments (ici vecteurs d'ondes).

Considérons pour simplifier le cas de la génération de second harmonique ; on a alors :

$$P(2w) \text{ proportionnel à } d^{(2)}E(w)E(w)$$

et donc

$$k (2w) = 2 k(w)$$
$$2 (2\pi n(w)) /\lambda F = n(2w) 2\pi /\lambda (2w)$$

$\lambda (w)$ étant la longueur d'onde du fondamental

$\lambda (2w)$ étant la longueur d'onde harmonique.

C'est cette dernière condition qui est appelée "accord de phase".

Cette condition peut être réalisée en pratique par exemple en utilisant la biréfringence d'un matériau. Dans ce cas, l'onde harmonique (2w) et fondamentale (w) peuvent être polarisées suivant des directions propres différentes du cristal utilisé. Par exemple, si l'onde harmonique et polarisée extraordinaire et les deux ondes fondamentales entrant dans l'interaction, polarisées ordinaires, on devra vérifier :

$$2 (2\pi n_o(w)) /\lambda (w) = n_e (2w) 2\pi /\lambda (2w)$$

où

$n_o (w)$ est l'indice du milieu pour la longueur d'onde du fondamental

$n_e (2w)$ est l'indice du milieu pour l'harmonique

soit $n_e(2w) = n_o(w)$

Condition qui peut être réalisée dans certains matériaux soit en utilisant des effets de température, soit en changeant l'angle de propagation par rapport a l'axe optique ne = f(angle). L'angle considéré est l'angle entre la direction de propagation et l'axe optique du matériau considéré.

D'autres techniques peuvent être employées pour réaliser l'accord de phase telles que celles décrites dans les documents suivants :

- Article de N. BLOEMBERGEN et al publié dans Applied Physic Letters, 17, 483 de 1970 ;
- Article de B. JASKORZYNSKA et al publié dans SPIE volume 651, Insbruck de 1986 ;
- Article de T. TANIUCHI et al publié dans SPIE volume 864, Cannes 1987.

Par exemple, la présence d'un réseau de diffraction dans le matériau peut conduire à une annulation du désaccord entre k (2w) et 2k(w) si la période du réseau est bien choisie. On doit avoir :

$$k (2w) - 2k (w) = mK \text{ (réseau)} \text{ où m est un nombre entier et K le vecteur d'onde associé au réseau (K-} 2\pi/\text{période).}$$

Dans une telle interaction le réseau peut être créé soit sur les propriétés linéaires du matériau, soit sur les propriétés non linéaires de celui-ci. Dans ce dernier cas il est avantageux (plus grande efficacité) de créer un changement de signe du coefficient non linéaire concerné.

Cette technique est particulièrement intéressante dans des matériaux présentant des coefficients non linéaires élevés ne pouvant pas être utilisés avec les méthodes d'accord de phase classiques. C'est le cas par exemple pour les coefficients non linéaires X33 du LiNb03 et du LiTa03 qui mettent en jeu des ondes fondamentales et harmoniques polarisées suivant l'axe optique de ces matériaux (polarisation extraordinaire).

Si on considère le cas du LiNb03 avec X33, des démonstrations de principe ont déjà été effectuées en inversant périodiquement la polarisation ferroélectrique (et donc le signe de X33) au cours de la croissance du cristal (tel que cela a été décrit dans l'article de D. FENG publié dans Applied Physic Letters, 37, 607 de 1980.

Le but de l'invention est de proposer des moyens permettant des inversions périodiques du coefficient non linéaire d'un guide optique.

L'invention concerne donc un dispositif optique de traitement par effets non linéaires d'une onde optique possédant une longueur d'onde (w) déterminé et une longueur de cohérence (Lc = π/k(zw) - 2k(w)) pour l'intéraction non linéaire utilisée, caractérisée en ce qu'il comporte dans un substrat ferroélectrique transparent à la longueur d'onde (w) de l'onde optique :
- un guide optique à deux dimensions, implanté à la surface du substrat et orienté selon une première direction ;
- des zones de dopage réparties le long du guide optique, chaque zone de dopage ayant pour longueur selon la première direction un multiple impair de la longueur de cohérence (Lc) et le pas de répartition des zones de dopage ayant pour valeur un multiple pair de la longueur de cohérence, les zones de dopage donnant lieu à une inversion de la polarisation de l'onde optique par rapport aux zones comprises entre les zones de dopage.

L'invention concerne également un procédé de réalisation d'un dispositif optique caractérisé en ce qu'il comporte les étapes suivantes :

a) réalisation sur une face d'un substrat ferroélectrique transparent, de zones de dopages réparties le long d'une première direction à un pas égal à un multiple pair de la longueur de cohérence, chaque zone ayant une longueur égale à un multiple impair de la longueur de cohérence (Lc), le dopage étant tel qu'il inverse la polarisation de l'onde par rapport aux zones non dopées ;

b) réalisation d'un guide optique selon la première direction.

Enfin l'invention concerne un doubleur de fréquence comportant un guide optique à deux dimensions muni de zones de dopages réparties selon la longueur du guide optique avec une périodicité égale à la longueur de cohérence d'une onde optique à traiter, chaque zone ayant pour longueur une demi longueur de cohérence.

Les différents objets et caractéristiques de l'invention apparaîtront plus clairement dans la description qui va suivre faite à titre d'exemple en se reportant aux figures annexées qui représentent :

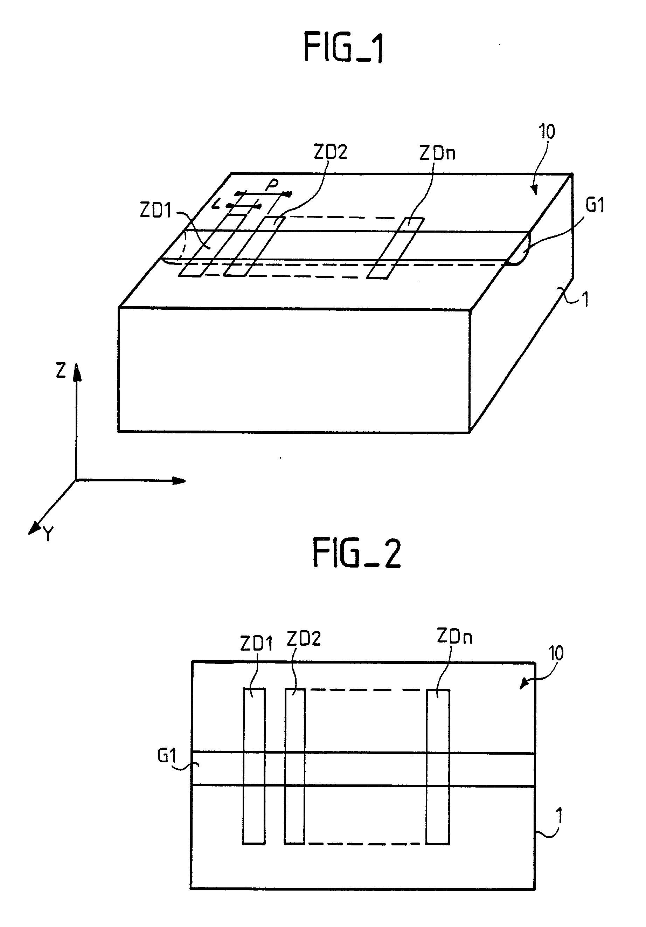

Les figures 1 et 2, un exemple de réalisation du dispositif de l'invention.

Le but de l'invention est de proposer une méthode permettant de réaliser l'inversion périodique du coefficient non linéaire à postériori (après la croissance d'un cristal monodomaine) et en surface de façon à pouvoir réaliser un guide d'onde optique dans le matériau ainsi préparé. Dans ce cadre, la fabrication d'un guide d'onde pour les ondes fondamentale et harmonique est très importante car on peut ainsi créer, dans la zone d'interaction, des intensités optiques très importantes avec des puissances incidentes faibles ce qui conduit (l'intensité harmonique générée étant proportionnelle au carré de l'intensité fondamentale) à des efficacités importantes.

Bien que les principes décrits ici puissent s'appliquer à d'autres cristaux, pour des raisons de simplicité dans la description de l'invention, nous nous concentrerons sur le cas du LiNb03.

Il a été remarqué dans l'article de S. MIYAZAWA publié dans Joural Applied Physic, 50, 4599 de 1979 que la présence d'une concentration superficielle de dopants pouvant, dans certaines conditions (telles que concentration de dopant sur la face +C du crystal), entraîner la formation d'une zone dont l'orientation ferroélectrique est inversée par rapport à celle du substrat initial. En général, la zone de polarisation ferroélectrique inversée est donc superficielle et est donc avantageusement utilisée dans le cas d'ondes optiques guidées.

L'invention tire avantage de cet effet et prévoit, grâce à un dopage superficiel du matériau ferroélectrique sous une forme périodique, de créer, en surface du substrat, un renversement périodique de la polarisation ferroélectrique du cristal et donc du coefficient non linéaire. Ainsi, après fabrication d'un guide d'onde, on aura réalisé un dispositif doubleur de fréquence en optique intégrée pouvant utiliser le coefficient électrooptique le plus important du matériau considéré (ici X33 du LiNb03).

Les figures 1 et 2 représentent un exemple de réalisation du dispositif de l'invention.

Selon la figure 1, un substrat 1 orienté dans un trièdre de référence XYZ possède à sa surface 10, un

3

guide optique G1 orienté selon l'axe X. Des zones de dopages ZD1, ZD2, ... ZDn sont réparties selon la longueur du guide. Le pas de répartition p des zones selon l'exemple de la figure 1 est égal au double de la longueur de cohérence Lc pour la génération du second harmonique d'une onde lumineuse incidente Fl d'une onde lumineuse incidente Fl. Le longueur L d'une zone de dopage selon la direction Z est égale à une longueur de cohérence de l'onde lumineuse.

Selon la figure 2, représentant le dispositif en vue de dessus, les zones ZD1, ZD2, ... ZDn sont réalisées sous forme de bandes perpendiculaires à la direction X du guide G1.

Sur les figures 1 et 2, la longueur L a été prise égale à la moitié du pas p. Cependant on pourrait avoir des proportions différentes, par exemple $p = 2k \, L_c$ et $L = k \, L$ avec $k = 3$ ce qui ferait $p = 6 \, L_c$ et $L = 3 \, L_c$. La valeur du pas p pourrait également être différente en différentes zones du guide.

Un tel dispositif permet de réaliser un doubleur de fréquence, l'onde incidente Fl de fréquence w donnant alors à une onde FS de fréquence double 2w.

On va maintenant décrire un procédé de réalisation selon l'invention permettant de réaliser un tel dispositif.

A titre d'exemple de réalisation, on peut considérer le processus suivant :

1) Un réseau de bandes de Titane est déposé sur la face +C d'un substrat de LiNb03. Le pas du réseau est choisi de façon à compenser le désaccord de phase entre les ondes fondamentales et les ondes harmoniques que l'on désire générer.

2) Les bandes de Titane sont diffusées dans le substrat par un processus haute température (par exemple 1000 dégrés centésimaux pendant quelques heures dans une atmosphère d'oxygène).

3) Un guide d'onde est réalisé par un processus ne modifiant pas l'orientation des domaines ferroélectriques (par exemple l'échange protonique qui s'effectue à basse température tel que cela est décrit dans l'article de JL. JACKEL et al publié dans la revue Applied Physic Letters, 41, 607 de 1982.

Dans ce procédé, le pas p du réseau est choisi de manière à vérifier la relation :

$$2\pi(n_{ef}(2w) - n_{ef}(w)) / \lambda \, (2w) = 2\pi m/p$$

dans laquelle

$n_{ef}$ (2w) est l'indice effectif du mode du guide pour l'harmonique 2w de l'onde incidente ;

$n_{ef}$ (w) = est l'indice effectif du mode guidé pour le fondamental w de l'onde incidente ;

$\lambda$ (2w) est la longueur de l'onde harmonique correspondant à la fréquence optique 2w

m est un nombre entier

Dans le cas du LiNb03, en prenant les valeurs des indices de réfraction de la littérature, on obtiendra un pas minimum de réseau de (en considérant $n_{ef} = n$):

| longueur d'onde fondamentale | . 9 micromètres |
|---|---|
| indice à w | 2.1741 |
| indice à 2 w | 2.2765 |
| pas | 4.39 micromètres |
| longueur d'onde fondamentale | 1 micromètres |
| indice à w | 2.1647 |
| indice à 2 w | 2.2446 |
| pas | 6.255 micromètres |

Les points principaux du système décrit sont donc :

- renversement périodique de la polarisation ferroélectrique par diffusion d'un dopant à la surface +C du cristal ;

- création d'un guide d'ondes par un procédé ne modifiant pas les polarisations créées (par exemple par échange protonique).

Les avantages sont :

- génération non linéaire par accord de phase "articifiel" en utilisant un coefficient non linéaire important (X33 dans le cas de LiNb03 ou LiTa03 ou ferroléctrique) ;

- interaction guidée pour l'onde harmonique et fondamentale (contrairement à des configurations du type Cerenkov) entraînant une intensité harmonique proportionnelle au carré de la longueur d'interaction (proportionnelle seulement à la longueur dans le cas Cerenkov) ;

- forme du faisceau harmonique du type Gaussien et monomode facilement transformable par une optique classique.

Il est bien évident que la description qui précède n'a été faite qu'à titre d'exemple non limitatif. Les exemples numériques n'ont été fournis que pour illustrer la description.

D'autres variantes peuvent être envisagées sans sortir du cadre de l'invention. Notamment le substrat utilisé peut être un autre ferroélectrique que le LiNb03 ou le LiTa03. Dans ce cas l'implantation du guide et des zones de dopage ne seront pas forcément faits obligatoirement à partir de la face +C du substrat, l'essentiel étant d'obtenir des inversions périodiques de polarisation dans les zones dopées par rapport aux zones non dopées.

## Revendications

1) Dispositif optique de traitement pour effets non linéaires d'une onde optique possédant une longueur d'onde (w) et une longueur de cohérence (Lc) déterminées, caractérisé en ce qu'il comporte dans un substrat (1) ferroélectrique transparent à la longueur d'onde (w) de l'onde optique :
- un guide optique (G1) à deux dimensions, implanté à la surface (10) du substrat et orienté selon une première direction (X) ;
- des zones de dopages (ZD1 à ZDn) réparties le long du guide optique (G1), chaque zone de dopage ayant pour longueur selon la première direction (X) un multiple impair de la longueur de cohérence ($L_c$) et le pas de répartition des zones de dopage ayant pour valeur un multiple pair de la longueur de cohérence ($L_c$), les zones de dopage donnant lieu à une inversion de la polarisation de l'onde optique par rapport aux zones comprises entre les zones de dopage.

2. Dispositif selon la revendication 1, caractérisé en ce que les zones de dopage se présentent sous formes de bandes orientées selon une deuxième direction (Z) perpendiculaire à la première direction (X).

3. Dispositif selon la revendication 1, caractérisé en ce que le guide optique (G1) est réalisé à la face "+C" d'un substrat (1) à base de LiNb03 ou de LiTa03 et que les zones de dopages sont constituées d'un dopage à base de titane réalisé également sur la face "+C" du substrat.

4. Procédé de réalisation d'un dispositif optique selon la revendication 1, caractérisé en ce qu'il comporte les étapes suivantes :

a) réalisation, sur une face d'un substrat (1) ferroélectrique transparent,de zones de dopage réparties le long d'une première direction (X) à un pas égal à un multiple pair de la longueur de cohérence, chaque zone de dopage ayant une longueur égale à un multiple impair de la longueur de cohérence ($L_c$), le dopage étant tel qu'il inverse la polarisation de l'onde par rapport aux zones non dopées ;

b) réalisation d'un guide optique (G1) selon la première direction (X).

5. Procédé selon la revendication 4, caractérisé en ce que les zones de dopages sont réalisées sous formes de bandes orientées selon une deuxième direction (Z) perpendiculaire à la première direction (X).

6. Procédé selon la revendication 4, caractérisé en ce que les zones de dopage sont réalisées par un procédé de diffusion haute température tandis que la réalisation du guide (G1) est réalisée par un procédé d'échange ionique à basse température.

7. Procédé selon la revendication 6, caractérisé en ce que l'échange ionique est fait à base d'ions hydrogène ($H^+$).

8. Procédé selon la revendication 7, caractérisé en ce que le substrat est du LiNb03 ou du LiTa03 et que les zones de dopage sont réalisées sur la face "+C" du substrat par implantation de titane.

9. Procédé selon la revendication 8, caractérisé en ce que l'échange protonique conduit à la réalisation d'un guide en $Li_x H_{(1-x)} Nb03$ ou $Li_x H_{(1-x)} Ta O_3$.

10. Doubleur de fréquence selon la revendication 1, caractérisé en ce qu'un guide optique à deux dimensions réalisé à la surface d'un substrat et des zones de dopage réparties selon la longueur du guide optique avec une périodicité égale à la longueur de cohérence d'une onde optique à traiter chaque zone ayant pour longueur une demi longueur de cohérence.

# FIG_1

# FIG_2

# RAPPORT DE RECHERCHE EUROPEENNE

**Office européen des brevets**

Numero de la demande

EP 90 40 0321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | ELECTRONICS LETTERS, vol. 25, no. 3, 2 février 1989, pages 174-175; E.J. LIM et al.: "Second-harmonic generation of green light in periodically poled planar lithium niobate waveguide" * Chapters: poling process & device technology * | 1-9 | G 02 F 1/37 G 02 F 1/035 |
| P,X | IEEE PHOTONICS TECHNOLOGY LETTERS, vol. 1, no. 10, octobre 1989, pages 316-318, IEEE, New York, US; J. WEBJÖRN et al.: "Blue light generated by frequency doubling of laser diode light in a lithium niobate channel waveguide" * Page 316, colonne de gauche, lignes 13-29; références 3-6 * | 1-9 | |
| A | APPL. PHYS. LETT., vol. 47, no. 11, 1 décembre 1985, pages 1125-1127, American Institute of Physics; A. FEISST et al.: "Current induced periodic ferroelectric domain structures in LiNbO3 applied for efficient nonlinear optical frequency mixing" * Le document en entier * | 1-5,8 | |
| A | US-A-3 842 289 (YARIV) * Colonne 3, ligne 5 - colonne 4, ligne 43 * | 1 | |
| A | FR-A-2 385 114 (THOMSON-CSF) * Pages 4-8 * | 1 | |

**DOMAINES TECHNIQUES RECHERCHES (Int. Cl.5)**

G 02 F 1/00

Le présent rapport a été établi pour toutes les revendications

| Lieu de la recherche | Date d'achèvement de la recherche | Examinateur |
|---|---|---|
| LA HAYE | 15-05-1990 | DIOT P.M.L. |

EPO FORM 1503 03.82 (P0402)